## Europäisches Patentamt
## European Patent Office
## Office européen des brevets

(11) Veröffentlichungsnummer: **0 153 424**
**A1**

(12) **EUROPÄISCHE PATENTANMELDUNG**

(21) Anmeldenummer: **84101864.1**

(22) Anmeldetag: **22.02.84**

(51) Int. Cl.⁴: **B 65 G 1/06**

(43) Veröffentlichungstag der Anmeldung:
**04.09.85** Patentblatt **85/36**

(84) Benannte Vertragsstaaten:
**AT BE CH FR GB IT LI LU NL SE**

(71) Anmelder: **DSO "METALSNAB"**
**Narodno Sabranie-Platz 12**
**Sofia(BG)**

(72) Erfinder: **Spassov, Vikenti Petrov, Dipl.-Ing.**
**Boul.9ti Septemvri 128 Block 2-A**
**Sofia(BG)**

(74) Vertreter: **Finck, Dieter et al,**
**Patentanwälte v. Füner, Ebbinghaus, Finck Mariahilfplatz**
**2 & 3**
**D-8000 München 90(DE)**

(54) **System zur Lagerung von Metallen.**

(57) Zur Verbesserung des Nutzungsgrades von Lagerfläche und Lagerraum, der Produktivität von Regalbediengeräten und des Lagerdurchsatzes wird ein System zur Lagerung von Metallen verwendet, das aus einem Regalfachblock (1) aus in vertikaler und horizontaler Ebene liegenden Regalfächern (3) besteht. An beiden Seiten des Regalblocks liegen Förderer (13) und Regalbediengeräte, (5 bzw.6) auf deren Lastaufnahmeplattformen (8 bzw.9) Lastenschub- und Lastenaustragvorrichtungen (10,12 bzw.11,15) vorgesehen sind. Die Lastenaustragvorrichtung des Regalbediengerätes (6) im Versandbereich besteht aus einem Förderwagen (15) für Tiefaustragung mit angebauten angetriebenen Trommeln (20,21) für das Aufwickeln des Stromversorgungskabels (18) und des Zugseils (19), mit denen der Förderwagen verbunden ist. Die einseitig eingeschobenen, mit Metall beladenen Paletten (2) werden aufeinanderfolgend in den einzelnen Fächern des Regals nach Sortimenten gelagert. Das Austragen erfolgt durch den Förderwagen für Tiefaustragung, der durch einen Gleichstromelektromotor (22) unter die nächstliegende Palette in das entsprechende Regalfach einfährt. Eine durch den Querbalken der Palette betätigte Klinke (24) schaltet den Motor aus. Die Palette wird durch das Zugseil herausgezogen und von der Lastenaufnahmeplattform auf die Förderer ausgeschoben, wonach ein Lastkran (14) die Palette zum Versand verlädt. Der Förderwagen für Tiefaustragung liegt auf Führungsprofilen (16,17), die ihrerseits zwischen in den Regalfächern und auf den Lastaufnahemplattformen montierten Stützrollen (4) liegen.

./...

FIG. 1

FIG. 10

System zur Lagerung von Metallen

Die Erfindung betrifft ein System zur Lagerung von Metallen nach dem Oberbegriff des Patentanspruchs 1.

Bekannt ist ein System, bei dem die Metalle auf Paletten in durch Gänge getrennten Regaleinheiten gelagert werden, wobei jeder Gang den Einsatz eines Regalbediengerätes ermöglichen muß. Die Paletten mit dem gelagerten Metall müssen in den Regalen senkrecht zur Bewegungsrichtung des Regalbediengerätes positioniert werden.

Der Nachteil dieses Systems liegt darin, daß pro Regal nur je eine Palette gelagert werden kann, wobei die Länge des Gangs für den Einsatz des Regalbediengerätes größer als die Länge des Lagers oder genauso groß sein muß, während seine Breite um 1 m größer als die Länge der gespeicherten Einheiten sein muß, was ungenützte Lagerflächen ergibt.

Bekannt ist weiterhin ein mechanisiertes Lager für Einzellasten, bestehend aus einem Regalblock, der aus in vertikaler und horizontaler Richtung liegenden Regalfächern zusammengesetzt ist. An beiden Seiten des Regalblocks sind Förderer und Regalbediengeräte mit Lastaufnahmeplattformen und darauf angeordneten Schubvorrichtungen vorgesehen. In den Regalfächern sind Profile für die Bewegung der Förderwagen eingebaut. Beide Regalbediengeräte arbeiten im Synchronbetrieb, wobei bei Eingabe eines Förderwagens in ein gegebenes Regalfach durch das eine Gerät das andere einen anderen Förderwagen aus demselben Regalfach austrägt. Das untere Niveau der Regale dient der Rückförderung von leeren Förderwagen.

Dieses Lager hat den Nachteil, daß sein Betrieb nur bei vollständig mit Förderwagen ausgefüllten Regalfächern effektiv ist. Bei zum Teil leeren Förderwagen entstehen ineffektive Pausen für ihr Austragen aus dem Regalfach. Weiter verlangt der Synchronbetrieb beider Regalbediengeräte das gleichzeitige Eingeben und Austragen eines Förderwagens in bzw. aus dem betreffenden Regalfach, wodurch kein selbstständiger Betrieb beider Plattformen möglich ist. Dies senkt die Produktivität und den Durchsatz des Lagers.

Aufgabe der Erfindung ist es, ein System zur Lagerung von Metallen zu schaffen, das eine bessere Ausnutzung der Lagerfläche und des Lagerraums bei erhöhter Produktivität der Regalbediengeräte und des Durchsatzes im Lager gestattet, wobei das Austragen der Paletten aus den Regalfächern unabhängig von ihrer Lage durchführbar sein soll.

Diese Aufgabe wird durch ein System zur Lagerung von Metallen gelöst, das aus einem in horizontaler und vertikaler Ebene liegenden Regalfächern zusammengesetzten Regalblock besteht, an dessen beiden Seiten Förderer und Regalbediengeräte mit auf den Lastaufnahmeplattformen aufgebauten Lastaustrag- und Lastschubvorrichtungen angeordnet sind. Die auf der Plattform des im Versandbereich angeordneten Regalbediengerätes aufgebaute Lastaustragevorrichtung besteht aus einem Förderwagen für Tiefaustragung, der seinerseits mit einem Stromversorgungskabel und einem Zugseil verbunden ist, die auf angetriebenen Trommeln aufwickelbar sind. Der Förderwagen für Tiefaustragung liegt in Führungsprofilen, die ihrerseits zwischen in den Regalfächern bzw. auf der Lastaufnahmeplattform montierten Stützrollen liegen.

Das erfindungsgemäße System hat den Vorteil, daß die Gänge zwischen den Regalen entfallen, wodurch der Nutzungsgrad von Lagerfläche und Lagerraum erhöht wird. Es ist außerdem die Lagerung eines großen Sortimentes möglich. Die Förderleistung der Regalbediengeräte wird aufgrund der kürzeren Transportzyklen bedeutend erhöht und der Durchsatz im Lager verbessert.

Anhand von Zeichnungen wird ein Ausführungsbeispiel der Erfindung näher erläutert. Es zeigt:

Fig. 1 eine Draufsicht auf ein Metallager,

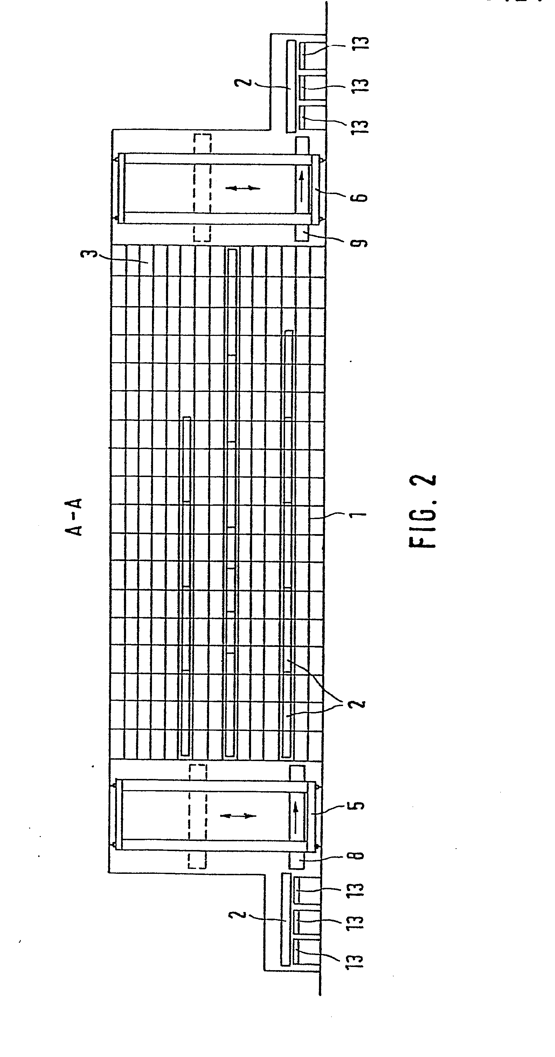

Fig. 2 den Schnitt A-A von Fig. 1,

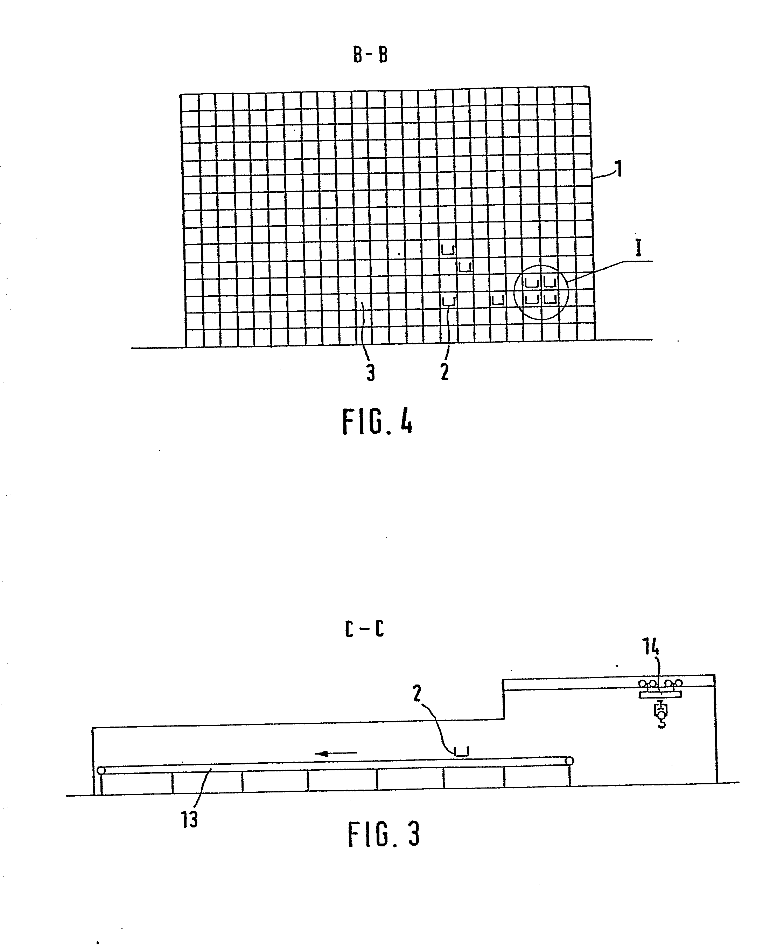

Fig. 3 den Schnitt C-C von Fig. 1,

Fig. 4 den Schnitt B-B von Fig. 1,

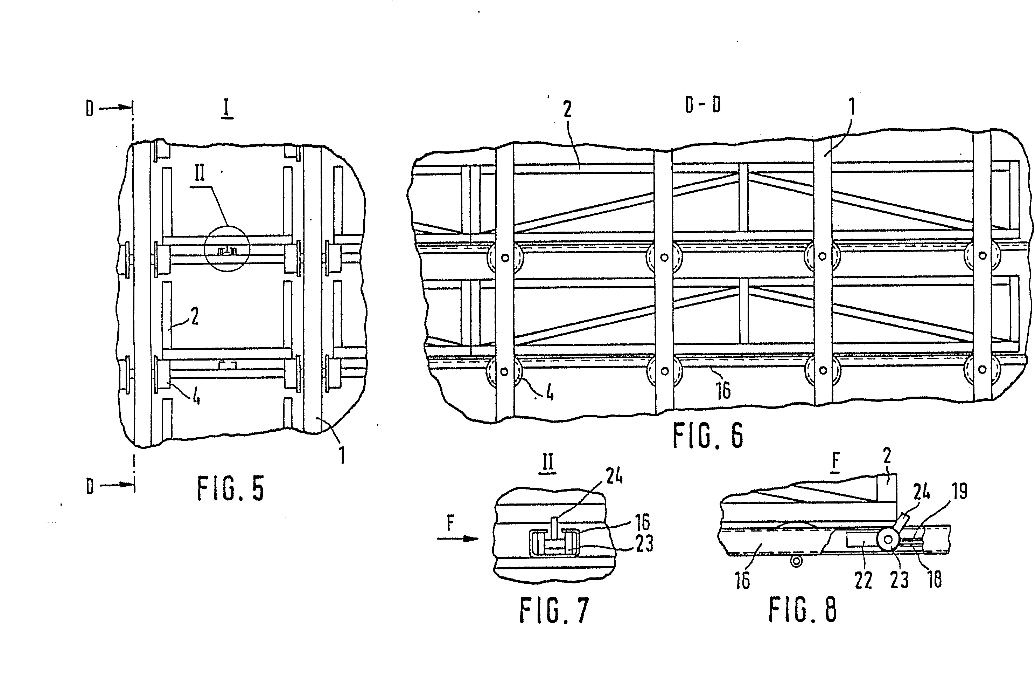

Fig. 5 eine Teilansicht der Regalfläche, die mit mit Metall beladenen Paletten beschickt ist,

Fig. 6 den Schnitt D-D von Fig. 5,

Fig. 7 ein in den Regalfächern und den Wagen für Tiefaustragung eingebautes Führungsprofil,

Fig. 8 die Ansicht F von Fig. 7,

Fig. 9 eine Draufsicht auf eine Lastaufnahmeplattform des Regalbediengerätes und

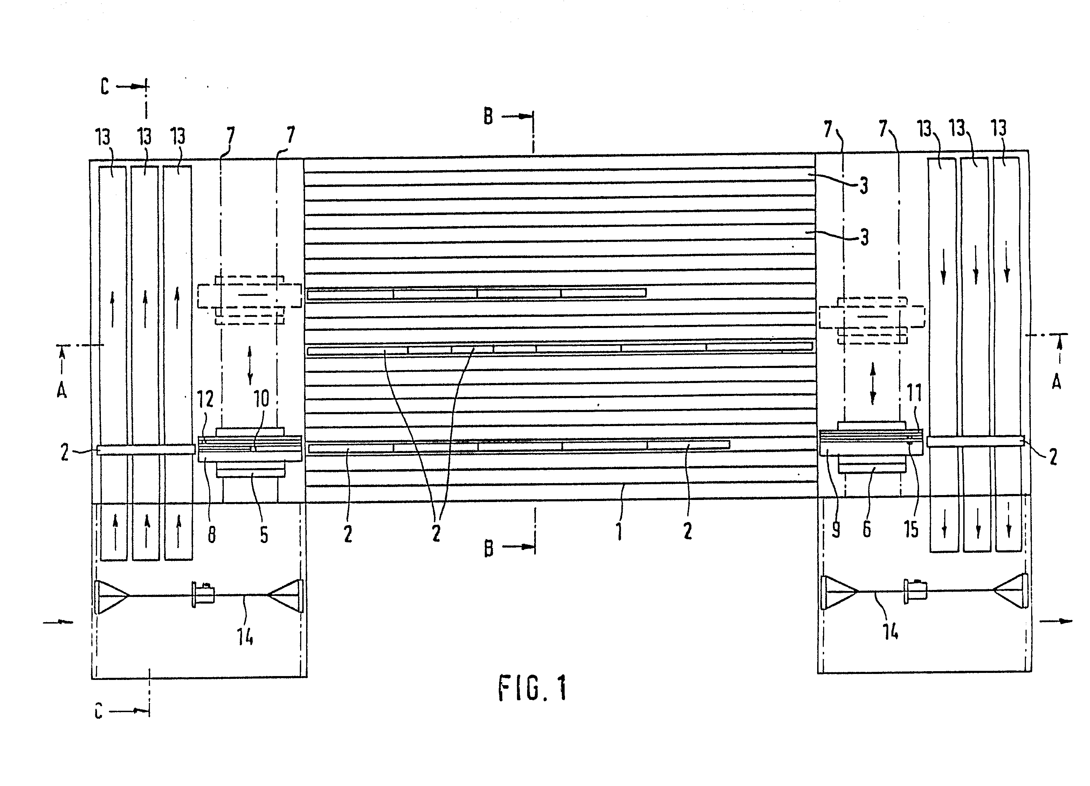

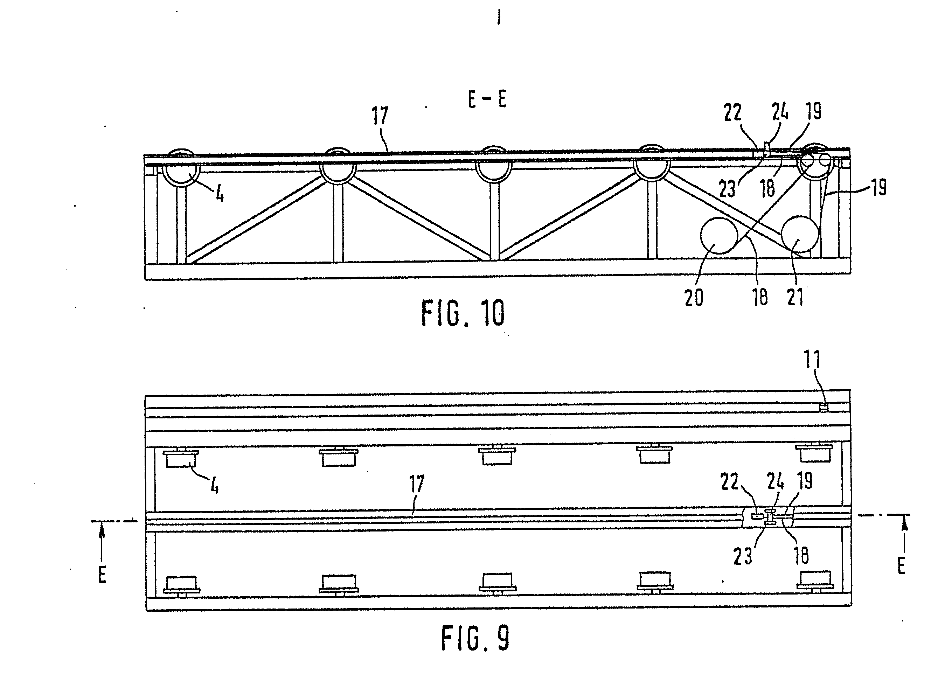

Fig. 1o den Schnitt E-E von Fig. 9.

Das System zur Lagerung von Metallen besteht aus einem Fachregalblock 1, in dem mit Metall beladene Paletten 2 gelagert werden und der aus in horizontaler und vertikaler Ebene liegenden Regalfächern 3 zusammengesetzt ist, die mit Stützrollen 4 versehen sind. An beiden Seiten des Regalblocks 1 sind senkrecht zu den Regalfächern 3 Förderer 13 und elektrische Kräne 14 montiert. Im Beschickungsbereich ist zwischen den Förderern 13 und dem Regalblock 1 ein Regalbediengerät 5 mit einer Lastaufnahmeplattform 8 angeordnet, auf der eine Lastschubvorrichtung 1o und eine Lastaustragvorrichtung 12 sitzen. Im Versandbereich ist ein Regalbediengerät 6 mit einer Lastaufnahmeplattform 9 mit einer darauf aufgesetzten Lastschubvorrichtung 11 und einer Lastenaustragevorrichtung vorgesehen, die aus einem Förderwagen 15 für Tiefaustragung besteht.

Der Förderwagen 15 für Tiefaustragung läuft auf in den Regalfächern 3 bzw. auf der Lastaufnahmeplattform 9 des Regalbediengerätes 6 montierten und zwischen Stützrollen 4 liegenden Führungsprofilen 16 und 17. Der Förderwagen 15 ist mit einem Stromversorgungskabel 18 und einem Zugseil 19 verbunden, das auf angetriebenen Trommeln 2o und 21 aufwickelbar ist, welche auf der Lastaufnahmeplattform 9 montiert sind. Die Lastaufnahmeplattform 9 besteht aus einem Gleichstrommotor 22 und aus Laufrädern 23, die auf einer gemeinsamen Achse montiert sind, an der eine Halteklinke 24 mit eingebauter Feder befestigt ist.

Das System funktioniert folgendermaßen:

Das Metall wird mittels LKW oder Eisenbahn zum Beschickungsbereich geliefert. Mit Hilfe des Lastkranes 14 werden die mit Metall beladenen Paletten 2 ausgeladen und auf den in der angegebenen Richtung laufenden Förderern 13 abgelegt. Die mit Metall beladenen Paletten 2 werden von den Förderern 13 durch die Lastaustragevorrichtung 12 des Regalbediengerätes 5 abgenommen. Danach werden die mit Metall beladenen Paletten 2 mit der Lastenschubvorrichtung 1o in die betreffenden Regalfächer 3 des Fachregalblocks 1 eingeschoben, wo sie dicht aufeinanderfolgend gelagert werden. Jedes einzelne Regalfach 3 ist einer bestimmten Metallsorte zugeordnet.

Das Austragen der mit Metall beladenen Paletten 2 aus dem Regalfachblock 1 erfolgt durch den Förderwagen 15 für Tiefaustragung, der, angetrieben durch den Gleichstrommotor 22, auf den Führungsprofilen 16 und 17 läuft. Wenn der Förderwagen 15 für Tiefaustragung in das betreffende Regalfach 3 eingefahren ist, erreicht er die am nächsten liegende Palette 2 und fährt unter dieselbe, wobei die Halteklinke 24 in der zur Laufrichtung entgegengesetzten Richtung unter der Einwirkung des querliegenden Balkens der mit Metall beladenen Palette 2 umgelenkt wird. Nachdem die Klinke 24 unter den Balken gefahren ist, wird sie unter Einwirkung der eingebauten Feder in die Ausgangsstellung zurückgesetzt, wobei die Stromversorgung durch den Gleichstrommotor 22 unterbrochen wird. Es beginnt das Herausziehen der mit Metall beladenen Palette 2 mit Hilfe des Zugseils 19, das auf der angetriebenen Trommel 21 aufgewickelt wird. Die herausgezogene, auf den Stützrollen 4 der Lastaufnahmeplattform 9 liegende, mit Metall beladene Palette 2 wird durch die Lastenschubvorrichtung 11 auf die in der gegebenen Richtung laufenden Förderer 13 ausgeschoben. Die mit Metall beladenen Paletten 2 werden mit Hilfe des Lastkrans 14 auf das Transportfahrzeug aufgeladen.

Patentansprüche

1. System zur Lagerung von Metallen, bestehend aus einem aus in horizontaler und vertikaler Ebene liegenden Regalfächern zusammengesetzten Fachregalblock, an dem beidseitig Förderer und Regalbediengeräte angeordnet sind, wobei auf den Lastaufnahmeplattformen der Regalbediengeräte Lastenaustrag- und Lastenschubvorrichtungen vorgesehen sind, dadurch g e k e n n - z e i c h n e t , daß die Lastenaustragvorrichtung, die auf der Lastenaufnahmeplattform (9) des Regalbediengerätes (6) im Versandbereich montiert ist, aus einem Förderwagen (15) für Tiefaustragung besteht, der seinerseits mit einem Stromversorgungskabel (18) und einem Zugseil (19) verbunden ist, die auf angetriebenen Trommeln (2o, 21) aufwickelbar sind, wobei der Förderwagen (15) für Tiefaustragung in Führungsprofilen (16, 17) liegt, die ihrerseits zwischen in den Regalfächern (3) bzw. auf der Lastaufnahmeplattform (9) montierten Stützrollen (4) liegen.

2. System zur Lagerung von Metallen nach Anspruch 1, dadurch g e k e n n z e i c h n e t , daß der Förderwagen (15) für Tiefaustragung aus an einer gemeinsamen Achse montierten Laufrädern (23) besteht und an dieser gemeinsamen Achse (23) eine Klinke (24) mit eingebauter Feder befestigt ist.

FIG.1

EPPAC-3 0153424

A - A

FIG. 2

EPaC-31699.4

0153424

EPAC-31699.4

0153424

B- B

FIG. 4

C - C

FIG. 3

EPAC-31699.4
0153424

FIG. 5

FIG. 6

FIG. 7

FIG. 8

E - E

FIG. 10

FIG. 9

EP 0 153 424

## EUROPÄISCHER RECHERCHENBERICHT

Europäisches
Patentamt

## EINSCHLÄGIGE DOKUMENTE

| Kategorie | Kennzeichnung des Dokuments mit Angabe. soweit erforderlich, der maßgeblichen Teile | Betrifft Anspruch | KLASSIFIKATION DER ANMELDUNG (Int. Cl. 3) |
|---|---|---|---|
| X | DE-A-1 506 976 (MANNESMANN AG) <br> * Seite 3, Zeile 10 - Seite 5, Zeile 11; Figuren 1,2 * | 1 | B 65 G 1/06 |
| X | DE-A-1 957 753 (RIGHI) <br> * Seite 1, Zeile 1 - Seite 4, Zeile 2 * | 1 | |
| A | US-A-3 986 605 (DOOLEY et al.) <br> * Spalte 4, Zeile 4 - Spalte 5, Zeile 33; Figur 1 * | 1,2 | |
| A | AT-B- 348 422 (OEHLER, WYHLEN <br> * Figuren 7a, 7b, 9a-9c * | 2 | |
| A | FR-A-2 431 445 (LUCAS) | | RECHERCHIERTE SACHGEBIETE (Int. Cl. 3) |
| A | GB-A-1 467 343 (MITSUBISHI JUKOGYO K.K.) | | B 65 G 1/00 <br> B 66 F 9/00 |

Der vorliegende Recherchenbericht wurde für alle Patentansprüche erstellt.

| Recherchenort <br> BERLIN | Abschlußdatum der Recherche <br> 05-10-1984 | Prüfer <br> SIMON J J P |
|---|---|---|